# EUROPÄISCHE PATENTSCHRIFT

(11) **EP 2 909 000 B1**
(45) Veröffentlichungstag und Bekanntmachung des Hinweises auf die Patenterteilung: **12.12.2018**
(21) Anmeldenummer: 13777245.5
(22) Anmeldetag: 16.10.2013
(51) Int. Cl.: B29C 49/04, B29C 49/70, B29K 67/00, B29K 23/00

(54) **VORRICHTUNG ZUM HERSTELLEN VON BEHÄLTERERZEUGNISSEN AUS KUNSTSTOFFMATERIALIEN**
DEVICE FOR PRODUCING CONTAINER PRODUCTS CONSISTING OF PLASTIC MATERIALS
DISPOSITIF PERMETTANT DE FABRIQUER DES PRODUITS DE TYPE RÉCIPIENT À PARTIR DE MATÉRIAUX DE SYNTHÈSE

(30) Priorität: 16.10.2012 US 201261714383 P
(43) Veröffentlichungstag der Anmeldung: 26.08.2015
(73) Patentinhaber: Kocher-Plastik Maschinenbau GmbH, 74429 Sulzbach-Laufen (DE)
(72) Erfinder: PRICE, Jeffrey L., Windermere, FL 34786 (US)
(74) Vertreter: Bartels und Partner, Patentanwälte
(86) Internationale Anmeldenummer: PCT/EP2013/003116
(87) Internationale Veröffentlichungsnummer: WO 2014/060101

(56) Entgegenhaltungen:
- EP-A1- 1 614 524
- EP-A2- 1 914 061
- DE-A1-102008 006 073
- US-A- 4 552 526

## Beschreibung

Die Erfindung betrifft eine Vorrichtung zum Herstellen von Behältererzeugnissen aus Kunststoffmaterialien, insbesondere mittels Durchführen eines Form-, Füll- und Siegelverfahrens, mit den Merkmalen im Oberbegriff von Anspruch 1.

Vorrichtungen zum Herstellen von Behältererzeugnissen aus Kunststoff sind Stand der Technik. Zum Herstellen des jeweiligen Erzeugnisses wird ein Schlauch plastifizierten Kunststoffmaterials in die betreffende Formeinrichtung hinein extrudiert, das voreilende Ende des Schlauches wird durch Verschweißen verschlossen und durch Erzeugen eines am Schlauch wirkenden pneumatischen Druckgradienten wird dieser aufgeweitet und zur Bildung des Behälters an die Formflächen der Formeinrichtung angelegt. Bei der Durchführung derartiger Herstellverfahren, beispielsweise nach dem auf diesem technischen Gebiet bekannten bottelpack®-Verfahren, wird dann der jeweilige Behälter über einen entsprechenden Fülldorn steril innerhalb der Formeinrichtung befüllt und nach Abziehen des Fülldornes hermetisch durch Siegeln verschlossen.

Für die wirtschaftliche und rationelle Herstellung mit vorgebbaren Ausstoßraten an Behältererzeugnissen ist es auch Stand der Technik, siehe US-Patent US 8 486 324 B2, in der Formeinrichtung Formflächen für die gleichzeitige Formung mehrerer, übereinander angeordneter Behälter auszubilden. Die Erhöhung der Produktionsgeschwindigkeit durch die gleichzeitige Ausbildung mehrere zusammenhängender Behälter muss jedoch in diesem Fall mit Verarbeitungsschwierigkeiten erkauft werden. So ist ein sicherer Entformungsvorgang einer entsprechend breitflächigen Behältergruppe davon abhängig, dass gut verarbeitbare Kunststoffmaterialien eingesetzt werden, beispielsweise Polyethylen. Wenn bei Anwendungen hohe Anforderungen an die Sterilität zu stellen sind und anstelle von Polyethylen das eine höhere Autoklavierungstemperatur zulassende Polypropylen als Behältermaterial eingesetzt werden soll, ergeben sich Herstellungsprobleme. Die Produktionsgeschwindigkeit ist bei der aus dem US-Patent 8 486 324 B2 bekannten Vorrichtung auch insofern begrenzt, weil trotz der gleichzeitigen Formungen der Behältnisse die Herstellung in der Art eines Stückprozesses erfolgt, weil pro Herstellzyklus jeweils zwei oder höchstens drei übereinanderliegende Reihen von Behältern gebildet werden, die gesondert für die weitere Handhabung anfallen. Ein kontinuierlicher Herstellprozess ist insoweit nicht möglich.

Das Dokument DE 10 2008 006 073 A1 offenbart eine Vorrichtung der eingangs genannten Gattung, die im Hinblick auf die Erhöhung der Produktionsgeschwindigkeit anstelle einer Art Stückprozess die Herstellung einer Behälterkette aus zusammenhängenden Behältern ermöglicht, wobei sich die Behälterkette aus der Formeinrichtung entlang der Herstellungslinie wegbewegt. Neben der dadurch erreichten rationelleren Fertigung ermöglicht diese Vorrichtung auch die Verwendung beliebiger Kunststoffmaterialien, weil eine Entformungseinrichtung, die außerhalb der Formeinrichtung an der ausgetretenen Behälterkette angreift, zur Unterstützung eines Ausformvorganges vorgesehen ist.

Die EP 1 614 524 A1 beschreibt eine Kunststoff-Spritzgussmaschine zur Herstellung von Behältern, wobei in einem Maschinenrahmen eine Formeinrichtung aus bewegbaren Formflächen, die eine vorgebbare Behältergeometrie definieren, angeordnet ist. An die Formflächen ist ein Formschlauch plasitifizierten Kunststoffmaterials für einen Formgebungs-, Füll- und/oder Siegelvorgang anlegbar. Die Kunststoff-Spritzgussmaschine weist eine Führungs- und Halteeinrichtung auf, die wiederum bewegbare Führungs- und Halteteile aufweist, die derart ansteuerbar sind, dass in mindestens einer von möglichen Funktionspositionen außerhalb des Formbereiches der Formeinrichtung diese am Formschlauch selbst und/oder an dem jeweiligen Kunststoffmaterial angreifen, das mindestens ein fertiggestelltes Behältererzeugnis und/oder dessen Inhalt umgibt.

Ausgehend von diesem Stand der Technik stellt sich die Erfindung die Aufgabe, eine Vorrichtung zur Verfügung zu stellen, die bei Beibehaltung der Vorteile der dem vorstehend genannten Stand der Technik entsprechenden Vorrichtung, sich durch eine vereinfachte Bauweise auszeichnet.

Erfindungsgemäß ist diese Aufgabe durch eine Vorrichtung gelöst, die die Merkmale des Patentanspruches 1 in seiner Gesamtheit aufweist.

Gemäß dem kennzeichnenden Teil des Anspruches 1 zeichnet sich die erfindungsgemäße Vorrichtung dadurch aus, dass die bewegbaren Führungs- und Halteteile am Ende eines jeweiligen Formgebungs-, Füll- und Siegelvorganges für das Behältererzeugnis in eine Funktionsposition bringbar sind, in der sie am Formschlauch in dem an den Eingang der Formeinrichtung angrenzenden Abschnitt an zueinander gegenüberliegenden Seiten des Schlauches abstützend anliegen. Die dadurch in unmittelbarer Nähe des Kopfbereiches der Behälter gebildete Abstützung gewährleistet eine besonders sichere Entformung mit gleichmäßigem Ablösen der Behälter von den sich beim Entformungsvorgang auseinanderbewegenden Formflächen.

Es ist vorgesehen, dass eine Führungs- und Halteeinrichtung vorgesehen ist, die bewegbare Führungs- und Halteteile aufweist, die derart ansteuerbar sind, dass in mindestens einer von möglichen Funktionspositionen außerhalb des Formbereiches der Formeinrichtung diese am Formschlauch selbst und/oder an dem jeweiligen Kunststoffmaterial angreifen, das mindestens ein fertiggestelltes Behältererzeugnis und/oder dessen Inhalt umgibt. Die auf den Formschlauch selbst und/oder die Behältererzeugnisse ausgeübte Führungs- und Haltewirkung ermöglicht einen problemlosen Entformungsvorgang und dadurch eine problemlose Verarbeitung gewünschter Kunststoffmaterialien ohne den Einsatz einer an der ausgetretenen Behälterkette angreifenden, außerhalb des Herstellbereichs angeordneten Entformungseinrichtung. Neben der angestrebten Vereinfachung ergibt sich auch der Vorteil einer verringerten Baugröße der Gesamtvorrichtung. Ferner lassen sich kontinuierlich die Behältererzeugnisse herstellen. Die erfindungsgemäße Lösung lässt sich als Ganzes leicht sterilisieren und auch für geringe Abfüllmengen an teurem Abfüllgut konzipieren.

Die Formeinrichtung kann die Formflächen bildende Backen aufweisen, die mittels einer Schließeinheit in zur vertikalen Bewegungsrichtung des Formschlauches senkrecht verlaufender Bewegungsrichtung zwischen einer Form-Schließstellung und einer die Form öffnenden Stellung bewegbar sind, wobei eine Verschiebeeinheit vorgesehen ist, mittels deren die Schließeinheit aus einer Startposition während des Formgebungs-, Füll- und Siegelvorganges zusammen mit der Bewegung des Formschlauches vertikal nach unten und nach Beendigung des Formgebungs-, Füll- und Siegelvorganges in die Startposition nach oben bewegbar ist. Durch diese Art der Vertikalbewegungen ist ein kontinuierlicher Herstellprozess mit geringstem Vorrichtungsaufwand realisierbar, weil für jeden Formvorgang lediglich ein Backenpaar erforderlich ist, so dass keine Mehrzahl karussellartig zusammenfahrender Backenpaare erforderlich ist.

Mit Vorteil kann die Formeinrichtung den Hauptteil der Behälter ausformende Hauptbacken sowie Kopfbacken aufweisen, die mittels der Schließeinheit unabhängig von den Hauptbacken für einen Füll- und anschließenden Siegelvorgang zum kopfseitigen Verschließen der Behälter bewegbar sind.

Für die Überführung der Führungs- und Halteteile in jeweilige Funktionspositionen kann die Anordnung mit Vorteil so getroffen sein, dass die Führungs- und Halteeinrichtung mittels einer zweiten Verschiebeeinheit, die unabhängig von der Verschiebeeinheit der Schließeinheit betätigbar ist, zwischen einer oberen Stellung, die der Wirkposition der Führungs- und Halteteile entspricht, und abgesenkten Stellungen verfahrbar ist.

Hinsichtlich der baulichen Gestaltung der Führungs- und Halteeinrichtung kann die Anordnung mit Vorteil so getroffen sein, dass sie für jedes Führungs- und Halteteil eine Betätigungseinheit aufweist, die in senkrecht zur Vertikalen verlaufender Richtung zwischen einer aneinander angenäherten Stellung, die der Wirkposition der Führungs- und Halteteile entspricht, und einer auseinandergefahrenen Stellung verfahrbar sind. Dabei können die Betätigungseinheiten für zugehörige Führungs- und Halteteile einen Schwenkantrieb aufweisen, mittels dessen die Führungs- und Halteteile zwischen einer bei der Wirkposition eingenommenen Schwenklage, in der sich diese in einer auf den Formschlauch ausgerichteten Schwenkstellung befinden, und Stellungen rückschwenkbar sind, in der sie sich außerhalb des Bereichs der Formeinrichtung befinden.

Die Führungs- und Halteteile können in Form von Abstützleisten vorgesehen sein, die sich bei der der Wirkposition entsprechenden Schwenklage über die gesamte Länge der Formtrennebene der Formeinrichtung erstrecken und für in einer Horizontalebene verlaufenden Schwenkbewegungen an Schwenkwellen der zugehörigen Betätigungseinheit angebracht sind, die sich neben der Formtrennebene vertikal und zueinander parallel erstrecken. Durch langgestreckte Leisten lässt sich auf einfache Weise die Abstützung für eine entsprechend ausgedehnte Behälterreihe realisieren.

Bei besonders vorteilhaften Ausführungsbeispielen können die Betätigungseinheiten der Führungs- und Halteeinrichtungen weitere Führungs- und Halteteile aufweisen, die in Richtung einer Schließstellung aufeinander zu- und in Richtung mindestens einer geöffneten Stellung voneinander wegbewegbar sind und in mindestens einer der Schließstellungen zumindest teilweise an dem jeweiligen Kunststoffmaterial angreifen, das mindestens ein fertiggestelltes Behältererzeugnis und/oder dessen Inhalt umgibt. Dadurch lässt sich der Entformungsvorgang besonders sicher gestalten.

Dabei kann mit besonderem Vorteil der in einer Vertikalebene gesehene axiale Abstand zwischen der jeweiligen Betätigungseinheit und der zuordenbaren Abstützleiste derart bemessen sein, dass ein von der Formvorrichtung jeweils stammendes, noch warmes Behältererzeugnis vor Übernahme durch die weiteren Führungs- und Halteteile der Betätigungseinheiten unter Bildung einer Art Kühlstrecke aufgenommen ist.

Für einen besonders sicheren Halteeingriff können die Abstützleisten für die Anlage am Formschlauch konisch aufeinander zulaufende Anlagekanten aufweisen.

Hinsichtlich der konstruktiven Gestaltung der Schließeinheit der Formeinrichtung kann die Anordnung mit Vorteil so getroffen sein, dass die Schließeinheit einen Hauptträger aufweist, an dem Hauptbacken und Kopfbacken unabhängig voneinander in horizontaler Richtung bewegbar geführt sind und der mittels der ersten Verschiebeeinheit an Vertikalführungen des Vorrichtungsgestelles verschiebbar gelagert ist.

Für die Erzeugung der Schließ- und Öffnungsbewegungen der Hauptbacken und der Kopfbacken können diese mit einer jeweils zugeordneten eigenen Antriebseinrichtung verbunden sein. Von diesen kann zumindest eine ein mittels eines Aktuators betätigbares Hebelgetriebe aufweisen, wobei ein derartiger Aktuator beispielsweise in Form eines elektromotorisch betätigbaren Spindeltriebes vorgesehen sein kann.

Mit Vorteil können auch die Betätigungseinheiten an der Vertikalführung des Vorrichtungsgestells mittels einer zweiten Verschiebeeinheit vertikal verfahrbar geführt sein.

In vorteilhafter Weise können beide Verschiebeeinheiten je eine motorisch gesondert antreibbare Kugelumlaufspindel zur Erzeugung der jeweiligen Vertikalbewegungen aufweisen.

Die Verschiebeeinheit der Betätigungseinheiten kann in vorteilhafter Weise eine sich zwischen den zugehörigen Vertikalführungen des Vorrichtungsgestells vertikal erstreckende Querführung aufweisen, längs deren die Betätigungseinheiten mit den weiteren Führungs- und Halteteilen für ihre Horizontalbewegungen geführt und mittels mindestens eines Aktuators bewegbar sind, wobei zwischen den Betätigungseinheiten eine deren Horizontalbewegung synchronisierende Koppeleinrichtung vorhanden ist.

Nachstehend ist die Erfindung anhand eines in der Zeichnung gestellten Ausführungsbeispieles im Einzelnen erläutert. Es zeigen:
- Fig. 1: eine schematisch vereinfachte perspektivische Schrägansicht eines Ausführungsbeispiels der erfindungsgemäßen Vorrichtung;
- Fig. 2: in perspektivischer Schrägansicht lediglich einen Teilbereich der Vorrichtung, wobei die Form-Schließeinheit und die Führungs- und Halteeinrichtung mit jeweils zugehörigen Funktionselementen gezeigt sind;
- Fig. 3: eine Draufsicht des in Fig. 2 gezeigten Teilbereiches mit in demgegenüber veränderten Funktionspositionen befindlichen Komponenten;
- Fig. 4: eine Frontansicht des oberen Hauptteiles der Vorrichtung;
- Fig. 5: eine gegenüber Fig. 4 in größerem Maßstab gezeichnete Vorderansicht, in der der Betriebszustand bei Abschluss eines Formgebungs-, Füll- und Siegelvorganges dargestellt ist;
- Fig. 6: eine gegenüber Fig. 5 weiter vergrößerte Teildarstellung, in der der Betriebszustand des Füllvorganges bei teilweise geschlossener Formeinrichtung gezeigt ist; und
- Fig. 7 bis 11: der Fig. 6 entsprechende Darstellungen, in denen weitere Betriebszustände im Laufe des Herstellungszyklus gezeigt sind.

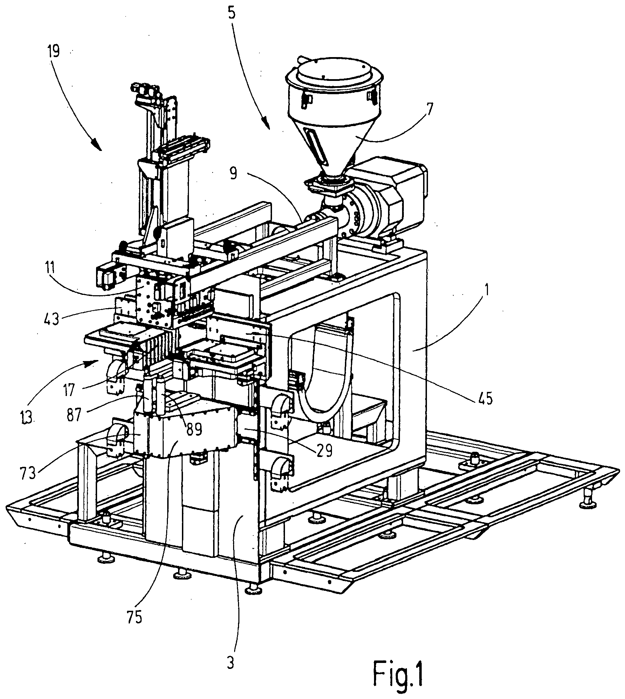

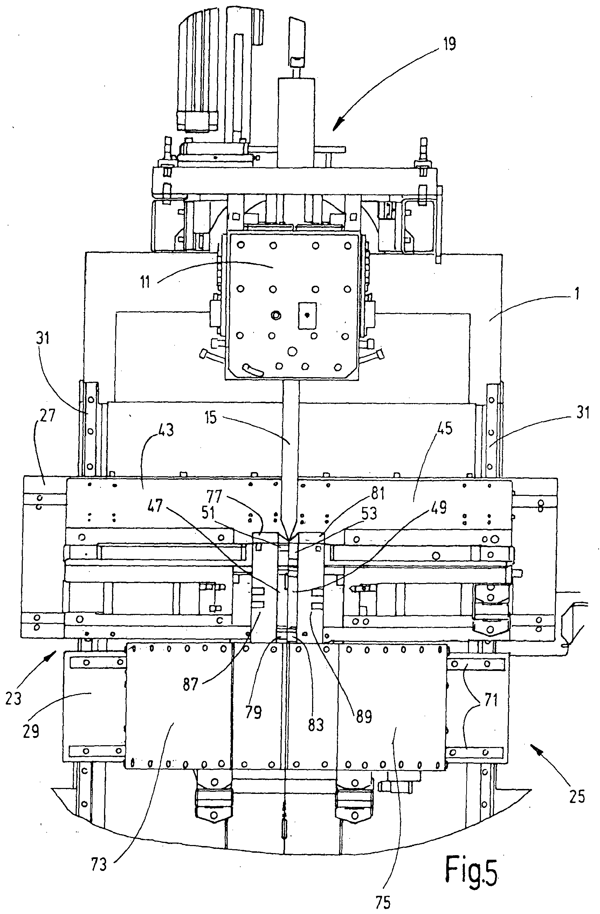

In Fig. 1, die in vereinfachter Darstellung eine Gesamtansicht eines Ausführungsbeispieles der erfindungsgemäßen Vorrichtung zeigt, ist ein Vorrichtungsgestell mit 1 bezeichnet, das eine rechteckige Kastenform mit einer in einer Vertikalebene verlaufenden Frontseite 3 besitzt. An der Oberseite der Kastenform des Gestelles 1 ist eine als Ganzes mit 5 bezeichnete Extrudereinrichtung angeordnet, die entsprechend dem einschlägigen Stand der Technik ausgebildet ist und einen Zuführtrichter 7 für Kunststoffgranulat und eine motorisch antreibbare Extruderschneckeneinheit 9 aufweist, um plastifizierte Kunststoffmasse einem Extrusionskopf 11 zuzuführen. Dieser ist ebenfalls entsprechend dem Stand der Technik ausgebildet und extrudiert das erhitzte, plastifizierte Kunststoffmaterial in Form eines Flachschlauches, der sich über die gesamte, entlang der Formtrennebene gemessene Breite einer Formeinrichtung 13 erstreckt. Dadurch lassen sich je nach Gestaltung der Formeinrichtung 13 in einem Formgebungsschritt aus einem einzigen extrudierten Formschlauch, der in Fig. 5 mit 15 bezeichnet ist, eine Mehrzahl von Behältererzeugnissen entsprechend der Anzahl von in einer Reihe nebeneinander liegenden Formflächen 17 ausbilden.

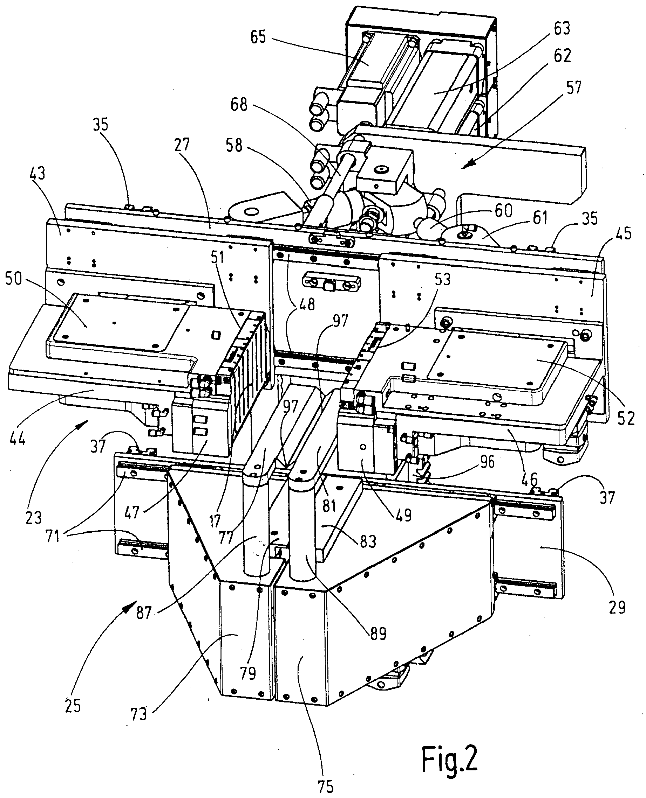

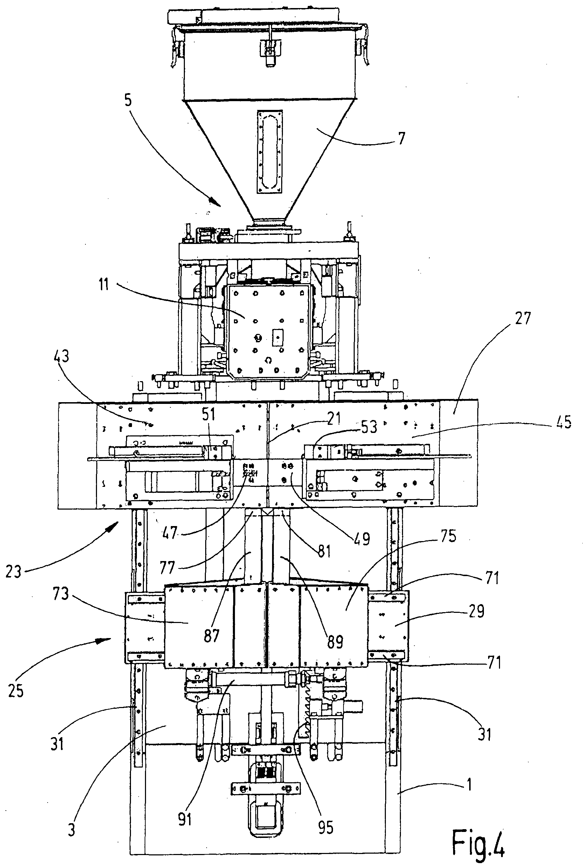

Von diesen sind in den Figuren 1 und 2, die die Formeinrichtung 13 in geöffnetem Zustand zeigen, die Formflächen 17 des linksseitig gelegenen Teiles der Formeinrichtung 13 sichtbar. An der Oberseite des Vorrichtungsgestelles 1 ist eine Fülleinrichtung 19 für eine dosierte Zufuhr von Füllmengen bei einem Füllvorgang der in der Formeinrichtung 13 geformten Behälter vorgesehen. Die Fülleinrichtung 19 weist eine der Anzahl der zu formenden Behälter entsprechende Anzahl von Fülldornen auf, von denen lediglich in Fig. 4, 6 und 7 ein einziger Fülldorn angedeutet und mit 21 bezeichnet ist. Die Kunststoffmasse wird durch den Extrusionskopf 11 derart extrudiert, dass der gebildete Formschlauch die Reihe der Fülldorne 21 umgibt, die dadurch innerhalb des Formschlauches 15 in eine Füllposition absenkbar sind, in der sie die zwischen den Formflächen 17 gebildeten Behälter befüllen. Für die Formgebung derjenigen Behälterteile, die insoweit die Einfüllmenge aufnehmen, ist ein zusätzlicher Aufweitvorgang vorgesehen, bei dem innerhalb der Behälterform ein Unterdruck angelegt wird, um die korrespondierenden Wandteile an die Form anzulegen (negativer Druckgradient). Zusätzlich oder alternativ kann dieser Aufweitvorgang auch durch Einblasen einer Stütz- oder Formluft erfolgen (positiver Druckgradient).

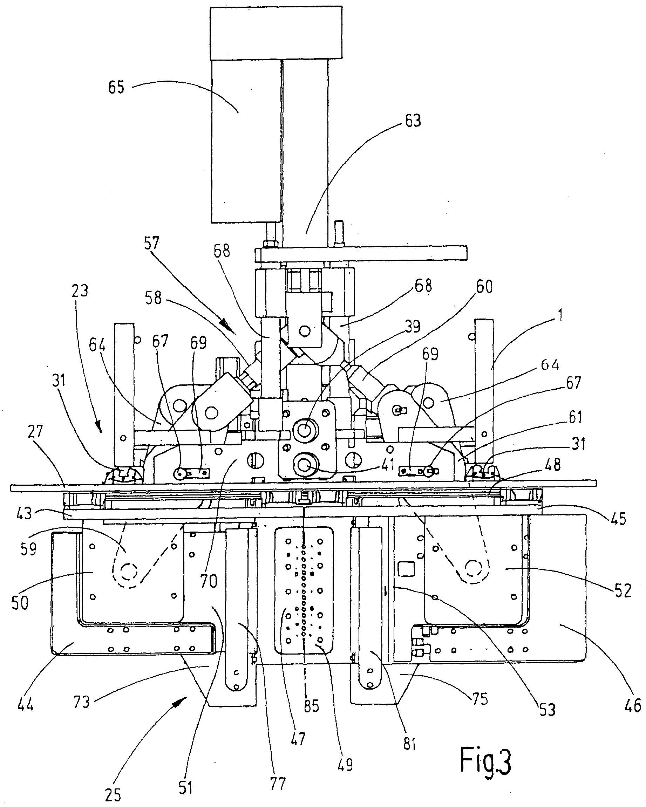

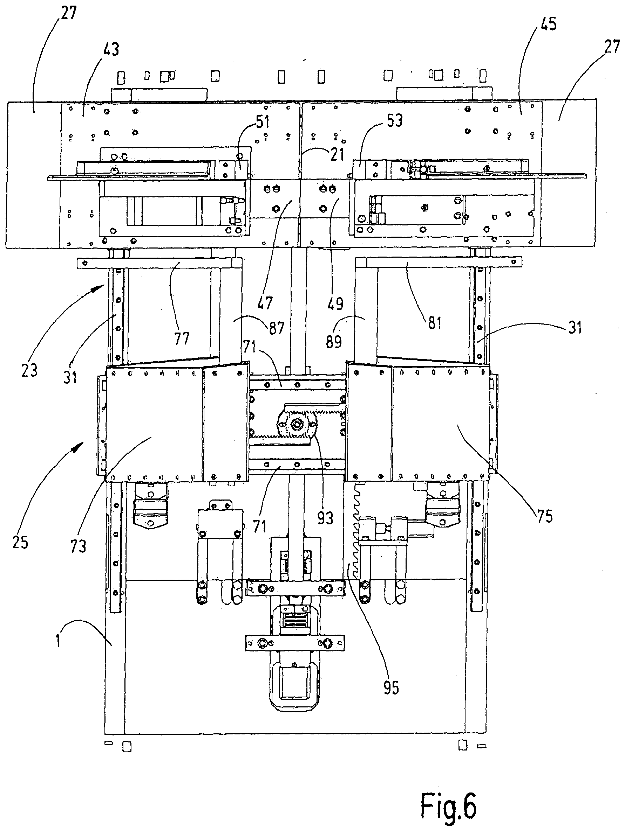

Die Figuren 2 und 3 zeigen in jeweils gesonderter Darstellung die Schließeinheit 23 der Formeinrichtung 13 sowie die Führungs- und Halteeinrichtung 25 des Ausführungsbeispieles. Wie Fig. 2 zeigt, weisen sowohl die Schließeinheit 23 als auch die Führungs- und Halteeinrichtung 25 jeweils eine sich in einer Vertikalebene erstreckende Trägerplatte 27 bzw. 29 auf. Wie die Figuren 4 bis 11 zeigen, weist das Vorrichtungsgestell 1 an der Frontseite 3 beidseits außen liegend jeweils eine Vertikalführung 31 auf, gebildet aus Führungsschienen 33 (Fig. 6), die zusammen mit Führungsschienen 35 an der Trägerplatte 27 und entsprechenden Führungsschienen 37 an der Trägerplatte 29 eine Kugellaufbahn bilden, so dass Schließeinheit 23 und Führungs- und Halteeinrichtung 25 an der Vertikalführung 31 in Vertikalrichtung verfahrbar geführt sind. Für die entsprechenden Vertikalbewegungen sind von der Maschinensteuerung betätigbare Spindeltriebe vorgesehen, die für die Schließeinheit 23 eine Kugelumlaufspindel 39 und für die Führungs- und Halteeinrichtung 25 eine Kugelumlaufspindel 41 aufweisen, siehe Fig. 3.

Die Schließeinheit 23 der Formeinrichtung 13 weist als Träger für jede Formhälfte der Gesamtform einen Schlitten auf, von denen der in den Figuren linksseitig gelegene Schlitten mit 43 und der rechtsseitige Schlitten mit 45 bezeichnet sind. Die Schlitten 43, 45 sind an Führungsleisten 48 der Trägerplatte 27 horizontal verfahrbar geführt. Am Schlitten 43 ist an einem daran befestigten Haltekörper 44 eine linksseitige Hauptbacke 47 angebracht. Am rechtsseitigen Schlitten 45 ist an einem daran befestigten Haltekörper 46 eine rechtsseitige Hauptbacke 49 angebracht. Die Hauptbacken 47, 49 formen bei der zusammengefahrenen Schließstellung, wie sie u.a. in Fig. 3 gezeigt ist, den Hauptteil der Behältnisse, der den jeweiligen Behälterinhalt aufnimmt. Auf der eine ebene Platte bildenden Oberseite des Haltekörpers 44 der linksseitigen Hauptbacke 47 ist ein eine Art Schieberplatte bildender Haltekörper 50 horizontal verschiebbar gelagert, an dem eine linksseitige Kopfbacke 51 angebracht ist. In entsprechender Weise ist auf der Oberseite des Haltekörpers 46 der rechtsseitigen Hauptbacke 49 ein Haltekörper 52 horizontal verschiebbar angeordnet, der den Träger für eine rechtsseitige Kopfbacke 53 bildet. Dadurch sind die Kopfbacken 51, 53 unabhängig von den Hauptbacken 47, 49 in die Schließstellung bewegbar, um den Kopfbereich der Behälter zu formen und um die befüllten Behälter steril zu schließen.

Für die Horizontalbewegungen zwischen Form-Schließstellung und Form-Offenstellung, wie sie in Fig. 2 gezeigt ist, ist für Hauptbacken 47, 49 und für Kopfbacken 51, 53 jeweils ein eigener Aktuator vorgesehen, von denen der für die Hauptbacken 47, 49 vorgesehene Aktuator mit den Trägerplatten 43 und 45 gekoppelt ist, um diese längs der in Fig. 3 sichtbaren Schienen 48 an der Trägerplatte 27 zu bewegen. Der den Kopfbacken 51, 53 zugeordnete Aktuator ist mit den Haltekörpern 50 und 52 der Kopfbacken 51, 53 gekoppelt. Beide Aktuatoren weisen jeweils ein Hebelgetriebe 57 auf, die übereinanderliegend angeordnet sind, so dass in den Figuren 2 und 3 vom untenliegenden Hebelgetriebe 57 wesentliche Teile nicht sichtbar sind. Dieses ist jedoch vom Funktionsumfang her gleich ausgebildet, wie das darüber angeordnete sichtbare Hebelgetriebe 57 als Antrieb für die Kopfbacken 51, 53. Jedes der Hebelgetriebe 57 weist als Antrieb einen Spindeltrieb 62 bzw. 63 mit je einem zugehörigen elektrischen Antriebsmotor 65 auf. In Fig. 3 sind lediglich der Spindeltrieb 63 und der zugehörige Motor 65 des oberen Hebelgetriebes 57 sichtbar. Die Spindeltriebe 62, 63 sind über Streben 68 mit einem Querträger 70 an der Rückseite der Trägerplatte 27 verbunden, so dass sich die aus den Hebelgetrieben 57 und den Spindeltrieben 62, 63 gebildete Einheit zusammen mit der Trägerplatte 27 an der Vertikalführung 31 entsprechend der Tätigkeit der Kugelumlaufspindel 39 bewegen kann.

Die Fig. 3 zeigt die Hauptbacken 47, 49 in Schließposition, während die Kopfbacken 51, 53 geöffnet sind. Bei dieser Stellung ist der zugehörige Spindeltrieb 63 mit seiner Betätigungsspindel für die Kopfbacken 51, 53 eingefahren und der darunter liegende, vergleichbar ausgebildete Spindeltrieb 62 ausgefahren, also die Spindel des Triebes in einer ihrer vorderen Betätigungsstellungen. Mit dem Spindeltrieb 63 gekoppelte Lenker 58 und 60 sind in Fig. 3 nach oben gezogen, wodurch Schwenkhebel 59 und 61 um je einen Drehpunkt 67 in die Lage geschwenkt sind, die in Fig. 3 gezeigt ist, wobei die an den Haltekörpern 50 und 52 angelenkten Enden der Schwenkhebel 59, 61 nach außen geschwenkt sind und die Kopfbacken 51, 53 auseinandergefahren sind. Die Drehpunkte 67 der Schwenkhebel 59, 61 sind in einem Führungsschlitz 69 im Querträger 70 bei ihren Bewegungen lageveränderlich. Für die Schließbewegung der Kopfbacken 51, 53 wird der Spindeltrieb 63 ausgefahren, so dass die Lenker 58, 60 die Schwenkhebel 59 und 61 am oberen Ende spreizen, so dass sich die mit den Haltekörpern 50, 52 gekoppelten Enden gegeneinander schwenken und die Kopfbacken 51, 53 schließen. Bei der in Fig. 3 gezeigten Schließstellung der Hauptbacken 47, 49 ist der untere Spindeltrieb 62 ausgefahren, so dass die beiden Schwenkhebel 64 des unteren Hebelgetriebes 57 am in Fig. 3 oberen. Ende auseinandergespreizt sind und die nicht gezeigten unteren Enden der Schwenkhebel 62, 64 zusammengefahren sind, um die Hauptbacken 47, 49 zu schließen.

Die Führungs- und Halteeinrichtung 25, deren Trägerplatte 29, wie auch die Trägerplatte 27 der Schließeinheit 23, an der Vertikalführung 31 des Gestelles 1 verfahrbar ist, weist in ähnlicher Weise wie die Trägerplatte 27 horizontale Führungsschienen 71 auf, an denen eine linksseitige Betätigungseinheit 73 und eine rechtsseitige Betätigungseinheit 75 horizontal verschiebbar geführt sind. Die Betätigungseinheiten 73, 75 bilden den Betätiger für zugehörige Führungs- und Halteteile, wobei die Betätigungseinheit 73 ein erstes linksseitiges Führungs- und Halteteil und ein zweites linksseitiges Führungs- und Halteteil betätigt, während die Betätigungseinheit 75 ein erstes rechtsseitiges Führungs- und Halteteil und ein zweites rechtsseitiges Führungs- und Halteteil betätigt, s. Fig. 2. Linksseitiges erstes Führungs- und Halteteil und rechtsseitiges erstes Führungs- und Halteteil sind jeweils durch schwenkbare Abstützleisten 77 bzw. 81 gebildet, die gleich ausgebildet sind und sich bei ihrer Wirkposition entsprechender Schwenklage in zur Richtung der Formtrennebene 85 (Fig. 3) paralleler Richtung erstrecken. Für die Einstellung der Schwenklage ist jede Abstützleiste 77, 81 an einer zugehörigen Schwenkwelle 87 bzw. 89 angebracht, die sich aus dem Gehäuse der jeweils zugehörigen Betätigungseinheit 73 bzw. 75 heraus zueinander parallel neben der Formtrennebene 85 in Vertikalrichtung erstrecken. Im Gehäuse der Betätigungseinheiten 73, 75 befindet sich für die Schwenkwellen 87, 89 jeweils ein Schwenkantrieb, der von der Maschinensteuerung betätigbar ist.

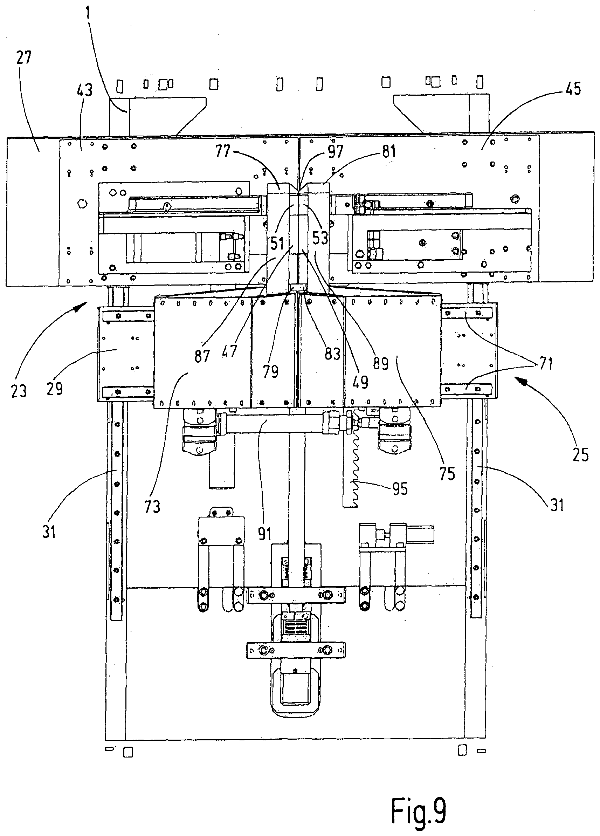

Die Betätigungseinheiten 73, 75 sind, wie bereits erwähnt, an der Trägerplatte 29 horizontal verfahrbar, wobei als Aktuator, wie lediglich in Figuren 9 bis 11 dargestellt ist, ein Hydraulikzylinder 91 vorgesehen ist. Für die Synchronisierung der Horizontalbewegungen der Betätigungseinheiten 73, 75 ist eine Koppeleinrichtung 93 vorgesehen, die beim geöffneten Zustand der Betätigungseinheiten 73, 75, der in Figuren 6 bis 8 gezeigt ist, sichtbar ist und durch je eine Zahnstange an jeder Betätigungseinheit 73, 75 gebildet ist, die mit einem gemeinsamen Ritzel kämmen. Wie die Figuren 4 und 6 bis 11 zeigen, erstreckt sich von der Trägerplatte 29 eine Zahnstange 95 nach unten. Fig. 2 zeigt, dass eine entsprechende Zahnstange 96 an der Trägerplatte 27 der Schließeinheit 23 angebracht ist. Die Zahnstangen 95, 96 bilden eine Sicherung gegen Absenken von Schließeinheit 23 und Führungs- und Halteeinrichtung 75 bei Energieausfall. Hierfür ist für jede Zahnstange 95, 96 eine Sperrklinke (die in der Zeichnung nicht dargestellt ist), vorgesehen, die gegen die Sperrstellung vorgespannt, jedoch im Normalbetrieb der Vorrichtung gegen die Vorspannung zurückgezogen ist.

Die Betätigungseinheiten 73 und 75 weisen jeweils ein den Drehantrieb für die zugeordnete Schwenkwelle 87, 89 enthaltendes Gehäuseteil auf, die im zusammengefahrenen Zustand, wie er in Fig. 2 gezeigt ist, ein Gehäuse mit einem einem abgestumpften Dreieck entsprechenden Umriss bilden. An der ebenen Oberseite sind linksseitiges, zweites Führungs- und Halteteil 79 sowie rechtsseitiges, zweites Führungs- und Halteteil 83, die jeweils durch einen Leistenkörper gebildet sind, derart angebracht, dass sie sich parallel zur Formtrennebene 85 erstrecken und bei der aneinander angenäherten Stellung der Betätigungseinheiten 73, 75, wie sie in Fig. 2 gezeigt ist, an der Reihe der gebildeten Behälter anliegen.

Die Figuren 5 bis 11 dienen der Erläuterung des Arbeitszyklus beim Herstellungsvorgang. Dabei zeigt Fig. 5 in schematisch vereinfachter Darstellung den Betriebszustand am Ende eines Herstellungsvorganges, wobei sich die Schließeinheit 23 mit ihrer Trägerplatte 27 und die Führungs- und Halteeinrichtung 25 mit ihrer Trägerplatte 29 zusammen mit dem sich mit Extrusionsgeschwindigkeit bewegenden Formschlauch 15 nach unten bewegt haben. Hauptbacken 47, 49 und Kopfbacken 51, 53 sind jeweils geschlossen und die Führungs- und Halteteile der Führungs- und Halteeinrichtung 25 befinden sich jeweils in ihrer Wirkposition. Dies bedeutet, dass die die ersten Führungs- und Halteteile bildenden Abstützleisten 77 und 81 oberhalb der Kopfbacken 51, 53 zueinander geschwenkt sind, sodass sie mit ihren konisch zulaufenden Anlagekanten 97 oberhalb des Kopfbereiches der gebildeten Behälter am Formschlauch 15 angreifen.

Gleichzeitig greifen die zweiten Führungs- und Halteteile 79 und 83, die an der Gehäuseoberseite der Betätigungseinheiten 73 und 75 angeordnet sind, bei der geschlossenen Position der Betätigungseinheiten 73, 75 an den jeweils geformten Behältern an. Bei der jetzt stattfindenden Formöffnung sind die fertigen Behälter zwischen ersten 77, 81 und zweiten 79, 83 Führungs- und Halteteilen aufgenommen und werden bei weiterer Vertikalbewegung mitgenommen. Die axiale Länge der die Abstützleisten 77, 81 tragenden Schwenkwellen 87, 89 ist so bemessen, dass sich für die von der Formeinrichtung jeweils stammenden Behältererzeugnisse zwischen den ersten und den zweiten Führungs- und Halteteilen eine Kühlstrecke ergibt. Die Vertikalbewegung der Führungs- und Halteteile 77, 81, 79, 83 kann derart erfolgen, dass der Formschlauch 15 geringfügig gereckt wird, wodurch eine besonders exakte Schlauchführung resultiert. Bei der aus dem Betriebszustand von Fig. 5 folgenden Öffnungsbewegung der Backen 47, 49, 51, 53 ist der sichere Ablauf des Entformungsvorganges durch die Abstützwirkung der Führungs- und Halteeinrichtung 25 sichergestellt.

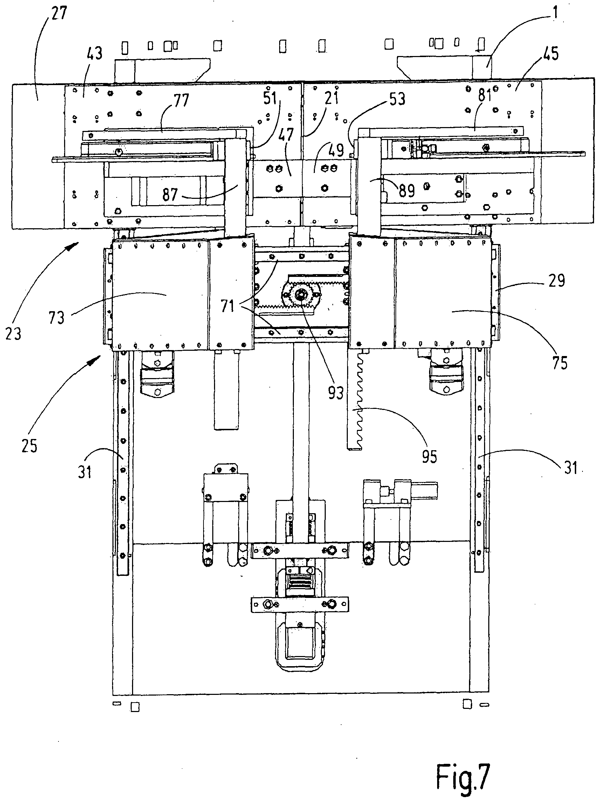

Die Figuren 6 bis 11 zeigen mehrere Einzelheiten der Funktionspositionen der Trägerplatte 27 der Schließeinheit 23 und der Betätigungseinheiten 73, 75 der Führungs- und Halteeinrichtung 25. Bei dem Zustand von Fig. 6 ist, anschließend an eine Startposition des Zyklus bei oberer Stellung der Trägerplatte 27, die Formeinrichtung teilweise geschlossen, indem die Hauptbacken 47, 49 zusammengefahren sind, die Kopfbacken 55 und 53 aber noch geöffnet sind. Durch das Zusammenfahren der Hauptbacken 47, 49 ist der Hauptteil der Behälter geformt. Durch Einfahren der Fülldorne 21 beginnt der Füllvorgang. Die Führungs- und Halteeinrichtung 25 befindet sich in einer unteren Stellung, bei der sich die Abstützleisten 77, 81 unterhalb der Formeinrichtung befinden und die Betätigungseinheiten 73 und 75 auseinandergefahren sind. Die Abstützleisten 77, 81 sind nach außen weggeschwenkt, so dass sich die Betätigungseinheiten 73, 75 frei nach oben bewegen können, wie dies in Fig. 7 gezeigt ist, wobei die Abstützleisten 77, 81 weiterhin oberhalb der Formeinrichtung nach außen weggeschwenkt sind. Die Betätigungseinheiten 73, 75 sind weiterhin auseinandergefahren.

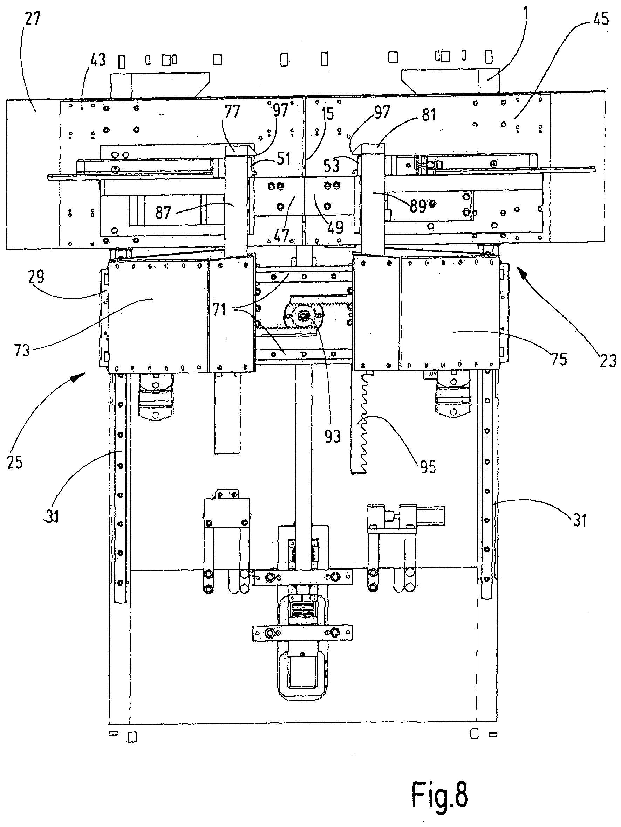

Fig. 8 zeigt den weiteren Schritt, bei dem, bei noch auseinandergefahrenen Betätigungseinheiten 73, 75, die Abstützleisten 77, 81 zum Parallelverlauf nach innen geschwenkt sind, wobei sich die konischen Abstützkanten 97 bei noch geöffneten Betätigungseinheiten 73, 75 in einem Abstand voneinander befinden. Schließeinheit 23 und Führungs- und Halteeinrichtung 25 fahren gemeinsam mit konstanter, der Extrusionsgeschwindigkeit des Formschlauches 15 entsprechender Geschwindigkeit nach unten, während die Fülldorne 21 nach oben wegfahren.

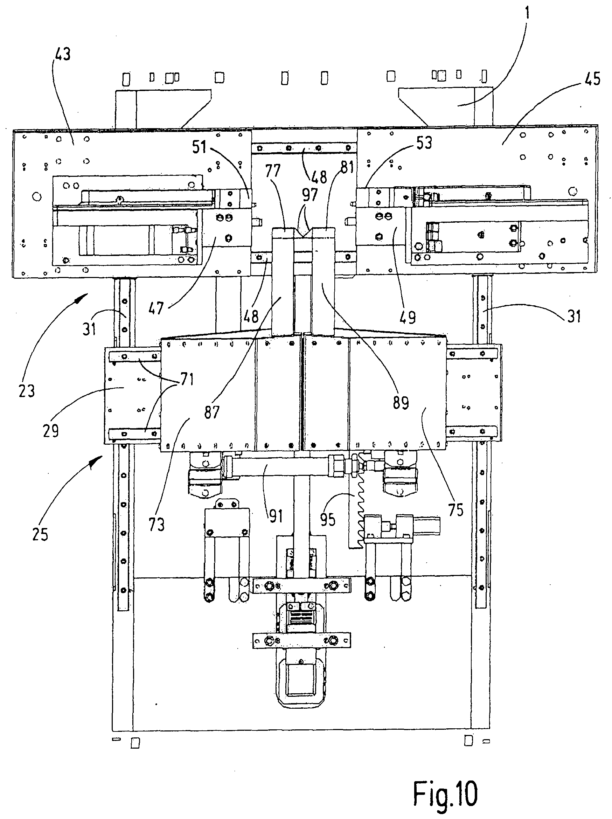

Wie Fig. 9 zeigt, fahren nunmehr die Kopfbacken 51, 53 zusammen, wobei der Kopfbereich geformt und die Behältnisse verschlossen werden. Beim Abschluss dieses Vorganges fahren auch die Betätigungseinheiten 73, 75 zusammen, so dass die Anlagekanten 97 die ersten Führungs- und Halteteile 77, 81 ebenso wie die zweiten Führungs- und Halteteile 79 und 83 ihre Wirkposition einnehmen. Die Fig. 10 zeigt Hauptbacken 47, 49 und Kopfbacken 51 und 53 in Öffnungsstellung, während die Betätigungseinheiten 73, 75 weiter mit konstanter Geschwindigkeit je nach Schlauchgeschwindigkeit nach unten fahren.

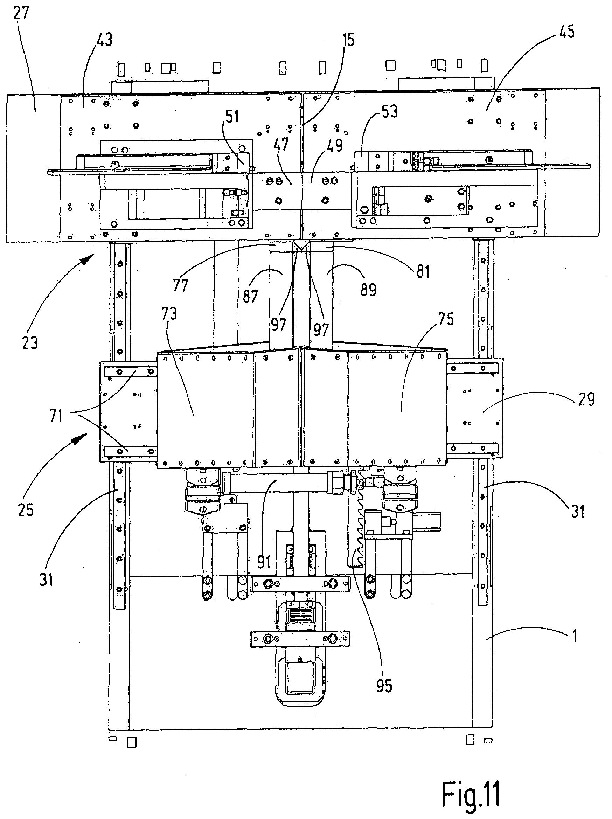

Die Fig. 11 zeigt, dass für den Beginn eines neuen Zyklusses die Betätigungseinheiten 73, 75 nach unten weggefahren sind, während sich die Trägerplatte 27 der Schließeinheit 2, 3 in die obere Startposition bewegt hat und die Hauptbacken 47, 49 wieder zusammengefahren sind, um den Hauptteil der Form für einen Formgebungsvorgang zu schließen.

## Patentansprüche

1. Vorrichtung zum Herstellen von Behältererzeugnissen aus Kunststoffmaterialien, insbesondere mittels Durchführen eines Form-, Füll- und Siegelverfahrens, mit einer Formeinrichtung (13), der ein Formschlauch (15) plastifizierten Kunststoffmaterials zuführbar ist und die eine vorgebbare Behältergeometrie nachempfindende, bewegbare Formflächen (17) aufweist, an die der Formschlauch (15) für einen Formgebungs-, Füll- und/oder Siegelvorgang anlegbar ist, wobei eine Führungs- und Halteeinrichtung (25) vorgesehen ist, die bewegbare Führungs- und Halteteile (77, 81; 79, 83) aufweist, die derart ansteuerbar sind, dass in mindestens einer von möglichen Funktionspositionen außerhalb des Formbereiches der Formeinrichtung (13) diese am Formschlauch (15) selbst und/oder an dem jeweiligen Kunststoffmaterial angreifen, das mindestens ein fertiggestelltes Behältererzeugnis und/oder dessen Inhalt umgibt, **dadurch gekennzeichnet, dass** die bewegbaren Führungs- und Halteteile (77, 81) am Ende eines jeweiligen Formgebungs-, Füll- und Siegelvorganges für das Behältererzeugnis in eine Funktionsposition bringbar sind, in der sie am Formschlauch (15) in dem an den Eingang der Formeinrichtung (13) angrenzenden Abschnitt an zueinander gegenüberliegenden Seiten des Schlauches (15) abstützend anliegen.

2. Vorrichtung nach Anspruch 1, **dadurch gekennzeichnet, dass** die Formeinrichtung (13) die Formflächen (17) bildende Backen (47, 49; 51, 53) aufweist, die mittels einer Schließeinheit (23) in zur vertikalen Bewegungsrichtung des Formschlauches (15) senkrecht verlaufender Bewegungsrichtung zwischen einer Form-Schließstellung und einer die Form öffnenden Stellung bewegbar sind und dass eine Verschiebeeinheit (39) vorgesehen ist, mittels deren die Schließeinheit (23) aus einer Startposition während des Formgebungs-, Füll- und Siegelvorganges zusammen mit der Bewegung des Formschlauches (15) vertikal nach unten und nach Beendigung des Formgebungs-, Füll- und Siegelvorgangs in die Startposition nach oben bewegbar ist.

3. Vorrichtung nach Anspruch 1 oder 2, **dadurch gekennzeichnet, dass** die Formeinrichtung (13) den Hauptteil der Behälter formende Hauptbacken (47, 49) sowie Kopfbacken (51, 53) aufweist, die mittels der Schließeinheit (23) unabhängig von den Hauptbacken (47, 49) für einen Füll- und anschließenden Siegelvorgang zum kopfseitigen Verschließen der Behälter bewegbar sind.

4. Vorrichtung nach einem der vorstehenden Ansprüche, **dadurch gekennzeichnet, dass** die Führungs- und Halteeinrichtung (25) mittels einer zweiten Verschiebeeinheit (41) zwischen einer oberen Stellung, die der Wirkposition der Führungs- und Halteteile (77, 79, 81, 83) entspricht, und abgesenkten Stellungen verfahrbar ist.

5. Vorrichtung nach einem der vorstehenden Ansprüche, **dadurch gekennzeichnet, dass** die Führungs- und Halteeinrichtung (25) für jedes Führungs- und Halteteil (77, 79, 81, 83) eine Betätigungseinheit (73, 75) aufweist, die in senkrecht zur Vertikalen verlaufender Richtung zwischen einer aneinander angenäherten Stellung, die der Wirkposition der Führungs- und Halteteile (77, 79, 81, 83) entspricht, und einer auseinandergefahrenen Stellung verfahrbar sind.

6. Vorrichtung nach einem der vorstehenden Ansprüche, **dadurch gekennzeichnet, dass** die Betätigungseinheiten (73, 75) für zugehörige Führungs- und Halteteile (77, 81) einen Schwenkantrieb aufweisen, mittels dessen diese Führungs- und Halteteile (77, 81) zwischen einer bei der Wirkposition eingenommenen Schwenklage, in der sich diese in einer auf den Formschlauch (15) ausgerichteten Schwenkstellung befinden, und Stellungen rückschwenkbar sind, in der sie sich außerhalb des Bereichs der Formeinrichtung (13) befinden.

7. Vorrichtung nach einem der vorstehenden Ansprüche, **dadurch gekennzeichnet, dass** die Führungs- und Halteteile in Form von Abstützleisten (77, 81) vorgesehen sind, die sich in der der Wirkposition entsprechenden Schwenklage über die gesamte Länge der Formtrennebene (85) der Formeinrichtung (13) erstrecken und für in einer Horizontalebene verlaufenden Schwenkbewegungen an Schwenkquellen (87, 89) der zugehörigen Betätigungseinheit (73, 75) angebracht sind, die sich neben der Formtrennebene (85) vertikal und zueinander parallel erstrecken.

8. Vorrichtung nach einem der vorstehenden Ansprüche, **dadurch gekennzeichnet, dass** die Betätigungseinheiten (73, 75) als Bestandteil der Führungs- und Halteeinrichtung (25) in Richtung einer Schließstellung aufeinander zu- und in Richtung mindestens einer geöffneten Stellung voneinander wegbewegbare weitere Führungs- und Halteteile (79, 83) aufweisen, die in mindestens einer der Schließstellungen zumindest teilweise an dem jeweiligen Kunststoffmaterial angreifen, das mindestens ein fertiggestelltes Behältererzeugnis und/oder dessen Inhalt umgibt.

9. Vorrichtung nach einem der vorstehenden Ansprüche, **dadurch gekennzeichnet, dass** der in einer Vertikalebene gesehene axiale Abstand zwischen der jeweiligen Betätigungseinheit (73, 75) und der zuordenbaren Abstützleiste (77, 81) derart bemessen ist, dass ein von der Formvorrichtung (13) jeweils stammendes, noch warmes Behältererzeugnis vor Übernahme durch die weiteren Führungs- und Halteteile (79, 83) der Betätigungseinheiten (73, 75) unter Bildung einer Art Kühlstrecke aufgenommen ist.

10. Vorrichtung nach einem der vorstehenden Ansprüche, **dadurch gekennzeichnet, dass** die Abstützleisten (77, 81) für die Anlage am Formschlauch (15) konisch aufeinander zulaufende Anlagekanten (97) aufweisen.

11. Vorrichtung nach einem der vorstehenden Ansprüche, **dadurch gekennzeichnet, dass** die Schließeinheit (23) der Formeinheit (13) einen Hauptträger (43) aufweist, an dem Hauptbacken (47, 49) und Kopfbacken (51, 53) unabhängig voneinander in horizontaler Richtung bewegbar geführt sind und der mittels der ersten Verschiebeeinheit (39) an einer Vertikalführung (31) des Vorrichtungsgestelles (1) verschiebbar gelagert ist.

12. Vorrichtung nach einem der vorstehenden Ansprüche, **dadurch gekennzeichnet, dass** Hauptbacken (47, 49) und Kopfbacken (51, 53) für die Schließ- und Öffnungsbewegungen mit einer zugeordneten eigenen Antriebseinrichtung verbunden sind, die jede ein mittels eines Aktuators (62, 63) betätigbares Hebelgetriebe (57) aufweist.

13. Vorrichtung nach einem der vorstehenden Ansprüche, **dadurch gekennzeichnet, dass** auch die Betätigungseinheiten (73; 75) an der Vertikalführung (31) des Vorrichtungsgestells (1) mittels einer zweiten Verschiebeeinheit (41) vertikal verfahrbar geführt sind.

14. Vorrichtung nach einem der vorstehenden Ansprüche, **dadurch gekennzeichnet, dass** beide Verschiebeeinheiten je eine motorisch gesondert antreibbare Kugelumlaufspindel (39, 41) zur Erzeugung der jeweiligen Vertikalbewegungen aufweisen.

15. Vorrichtung nach einem der vorstehenden Ansprüche, **dadurch gekennzeichnet, dass** die Verschiebeeinheit (41) der Betätigungseinheiten (73, 75) eine sich zwischen den zugehörigen Vertikalführungen (31) des Vorrichtungsgestells vertikal erstreckende Querführung (71) aufweist, längs deren die Betätigungseinheiten (73, 75) mit den weiteren Führungs- und Halteteilen (79, 83) für ihre Horizontalbewegungen geführt und mittels mindestens eines Aktuators (91) bewegbar sind, und dass zwischen den Betätigungseinheiten (73, 75) eine deren Horizontalbewegung synchronisierende Koppeleinrichtung (93) vorhanden ist.

## Claims

1. A device for manufacturing container products made of plastic materials, in particular by carrying out a moulding, filling and sealing process, said device having a moulding device (13) which can be supplied with a moulding tube (15) of plasticised plastic material, and which has a movable moulding surface (17) which adapts to the predefinable container geometry, to which said moulding tube (15) can be attached for a moulding, filling and/or sealing procedure, wherein a guide and retaining device (25) is provided which has movable guide and retaining parts (77, 81; 79, 83), which parts can be controlled such that in at least one of the possible functional positions outside of the moulding region of the moulding device (13), said parts engage with the moulding tube (15) itself and/or with the respective plastic material which surrounds at least one manufactured container product and/or the contents thereof, **characterised in that** the movable guide and retaining parts (77, 81) at the end of a respective moulding, filling and sealing process for the container product can be brought into a functional position, in which said parts supportively abut the moulding tube (15) in the section adjacent to the inlet to the moulding device (13), on opposite sides of the tube (15).

2. The device according to claim 1, **characterised in that** the moulding device (13) has jaws (47, 49; 51, 53) forming the mould surfaces (17), which jaws can be moved by means of a clamping unit (23) in a movement direction perpendicular to the vertical movement direction of the moulding tube (15) between a position in which the mould is closed and a position which opens the mould, and **in that** a sliding device (39) is provided, by means of which the clamping unit (23) can be moved vertically downwards from a starting position during the moulding, filling and sealing process, together with the movement of the moulding tube (15), and can be moved upwards into the starting position during the moulding, filling and sealing process at the end of the moulding.

3. The device according to claim 1 or 2, **characterised in that** the moulding device (13) has the main jaws (47, 49) moulding the main part of the container as well as head jaws (51, 53) which can be moved independently of the main jaws (47, 49) by means of the clamping unit (23) for a filling and subsequent sealing process in order to seal the head of the container.

4. The device according to one of the preceding claims, **characterised in that** the guide and retaining device (25) can be displaced, by means of a second sliding device (41), between an upper position which corresponds to the operative position of the guide and retaining parts (77, 79, 81, 83), and lowered positions.

5. The device according to one of the preceding claims, **characterised in that**, for each guide and retaining part (77, 79, 81, 83), the guide and retaining device (25) has an actuation unit (73, 75) which can be displaced in a direction extending perpendicular to the vertical direction between a position in which these parts are in proximity to one another, which corresponds to the operative position of the guide and retaining parts (77, 79, 81, 83), and a position in which these parts are moved apart from one another.

6. The device according to one of the preceding claims, **characterised in that** the actuation units (73, 75) for associated guide and retaining parts (77, 81) have a swivel drive, by means of which these guide and retaining parts (77, 81) can be pivoted back and forth between a pivoting position taken while in the operative position, in which these parts are located in a pivoting position aligned with the moulding tube (15), and positions in which these parts are located outside of the region of the moulding device (13).

7. The device according to one of the preceding claims, **characterised in that** the guide and retaining parts are provided in the form of support rails (77, 81) which extend over the entire length of the die parting plane (85) of the moulding device (13) in the pivoting position corresponding to the operative position and which are mounted on pivot shafts (87, 89) of the associated actuation unit (73, 75) for pivoting movements extending in a horizontal plane, which shafts extend vertically and parallel to one another adjacent to the die parting plane (85).

8. The device according to one of the preceding claims, **characterised in that**, as a component of the guide and retaining device (25), the actuation units (73, 75) have additional guide and retaining parts (79, 83) which can be moved towards one another in direction of a closed position, and moved away from one another in direction of at least one opened position, which parts, in at least one of the closed positions, engage, at least in part, with the respective plastic material which surrounds at least one manufactured container product and/or the contents thereof.

9. The device according to one of the preceding claims, **characterised in that** when viewed in a vertical plane, the dimensions of the axial spacing between the respective actuation unit (73, 75) and the associated support rail (77, 81) are such that a container product which is still warm from the moulding device (13) is received prior to transfer to the additional guide and retaining parts (79, 83) of the actuation units (73, 75) in order that a kind of cooling segment is formed.

10. The device according to one of the preceding claims, **characterised in that** the support rails (77, 81) which rest against the moulding tube (15) have conically converging bearing surfaces (97).

11. The device according to one of the preceding claims, **characterised in that** the clamping unit (23) of the moulding device (13) has a primary support (43), on which main jaws (47, 49) and head jaws (51, 53) are movably guided independently of one another in horizontal direction, and which primary support is adjustably mounted on a vertical guide (31) of the device frame (1) by means of the first sliding device (39).

12. The device according to one of the preceding claims, **characterised in that** main jaws (47, 49) and head jaws (51, 53) are each connected to an allocated, individual drive mechanism for the closing and opening movements, each of which has a lever mechanism (57) which can be actuated by means of an actuator (62, 63).

13. The device according to one of the preceding claims, **characterised in that** the actuation units (73; 75) are also guided on the vertical guide (31) of the device frame (1) such that they can be vertically displaced by means of a second sliding device (41).

14. The device according to one of the preceding claims, **characterised in that** each of the two sliding devices has a separate motor-driven ball screw (39, 41) for producing the respective vertical movements.

15. The device according to one of the preceding claims, **characterised in that** the sliding device (41) of the actuation units (73, 75) has a transverse guide (71) extending vertically between the associated vertical guides (31) of the device frame, along which transverse guide the actuation units (73, 75) with the further guide and retaining parts (79, 83) are guided for the horizontal movements thereof and can be moved by means of at least one actuator (91), and that there is a coupling device (93), between the actuation units (73, 75), synchronising the horizontal movements of said units.

## Revendications

1. Installation de fabrication de produits de type récipient en matière plastique, notamment en effectuant un procédé de moulage, de remplissage et de scellement, comprenant un dispositif (13) de moulage, auquel peut être apporté un tube (15) souple de moulage en matière plastique plastifiée et qui a des surfaces (17) de moulage mobiles qui se mettent à la place d'une géométrie de récipient pouvant être donnée à l'avance et auxquelles le tube (15) souple de moulage peut être appliqué pour une opération de moulage, de remplissage et de scellement, dans laquelle il est prévu un dispositif (25) de guidage et de maintien, qui a des parties (77, 81; 79, 83) de guidage et de maintien pouvant être commandées, de manière à ce que, dans au moins l'une des positions fonctionnelles possibles, à l'extérieur de la partie de moulage du dispositif (13) de moulage, celui-ci attaque le tube (15) souple de moulage soi-même et/ou la matière plastique, qui entoure au moins un produit de type récipient fini et/ou son contenu, **caractérisée en ce que** les parties (77, 81) mobiles de guidage et de maintien peuvent, à la fin d'une opération de façonnage, de remplissage et de scellement du produit de type récipient, être mises dans une position fonctionnelle, dans laquelle elles s'appliquent au tube (15) souple de moulage, dans la partie voisine de l'entrée du dispositif (13) de moulage, en s'appuyant sur des côtés opposés l'un à l'autre du tube (15) souple.

2. Installation suivant la revendication 1, **caractérisée en ce que** le dispositif (13) de moulage a des mâchoires (47, 49; 51, 53), qui forment les surfaces (17) de moulage et qui peuvent être déplacées, au moyen d'une unité (23) de fermeture, dans un sens de déplacement s'étendant perpendiculairement par rapport à la direction de déplacement vertical du tube (15) souple de moulage, entre une position de fermeture de moule et une position ouvrant le moule et, **en ce qu'**il est prévu une unité (39) de déplacement, au moyen de laquelle l'unité (23) de fermeture peut, à partir d'une position initiale pendant l'opération de façonnage, de remplissage et de scellement, être, ensemble avec le déplacement du tube (15) souple de moulage, déplacée verticalement vers le bas et après que l'opération de façonnage, de remplissage et de scellement est terminée, peut être déplacée vers le haut à la position initiale.

3. Installation suivant la revendication 1 ou 2, **caractérisée en ce que** le dispositif (13) de moulage a des mâchoires (47, 49) principales formant la partie principale du récipient ainsi que des mâchoires (51, 53) de tête, qui, au moyen de l'unité (23) de fermeture, peuvent, indépendamment des mâchoires (47, 49) principales, être déplacées pour une opération de remplissage et ensuite de scellement, afin de fermer le récipient du côté de la tête.

4. Installation suivant l'une des revendications précédentes, **caractérisée en ce que** le dispositif (25) de guidage et de maintien peut, au moyen d'une deuxième unité (41) de déplacement, être déplacé entre une position supérieure, qui correspond à la position active des parties (77, 79, 81, 83) de guidage et de maintien, et des positions abaissées.

5. Installation suivant l'une des revendications précédentes, **caractérisée en ce que** le dispositif (25) de guidage et de maintien a, pour chaque partie (77, 79, 81, 83) de guidage et de maintien, une unité (73, 75) d'actionnement, qui peut, dans une direction s'étendant perpendiculairement à la verticale, être déplacée entre une position proche l'une de l'autre, qui correspond à la position active des parties (77, 79, 81, 83) de guidage et de maintien, et une position éloignée l'une de l'autre.

6. Installation suivant l'une des revendications précédentes, **caractérisée en ce que** les unités (73, 75) d'actionnement ont, pour des parties (77, 81) de guidage et de maintien associées, un entraînement en pivotement, au moyen duquel ces parties (77, 81) de guidage et de maintien peuvent repivoter entre une position de pivotement prise dans la position active, dans laquelle elles se trouvent dans une position de pivotement dirigée sur le tube (15) souple de moulage, et des positions dans lesquelles elles se trouvent en dehors de la région du dispositif (13) de moulage.

7. Installation suivant l'une des revendications précédente, **caractérisée en ce que** les parties de guidage et de maintien sont prévues sous la forme de réglettes (77, 81) d'appui, qui, dans la position de pivotement correspondant à la position active, s'étendent sur toute la longueur du plan (85) de joint de moule du dispositif (13) de moulage et, pour des mouvements de pivotement s'étendant dans un plan horizontal, sont montées sur des sources (87, 89) de pivotement de l'unité (73, 75) d'actionnement associée, lesquelles s'étendent verticalement et parallèlement entre elles, à côté du plan (85) de joint du moule.

8. Installation suivant l'une des revendications précédentes, **caractérisée en ce que** les unités (73, 75) d'actionnement, en tant que parties constitutives du dispositif (25) de guidage et de maintien, ont d'autres parties (79, 83) de guidage et de maintien pouvant se rapprocher l'une de l'autre en direction d'une position de fermeture et s'écarter l'une de l'autre en direction d'au moins une position d'ouverture, autres parties (79, 83), qui, dans au moins l'une des positions de fermeture, attaquent, au moins en partie, la matière plastique, qui entoure au moins un produit de type récipient fini et/ou son contenu.

9. Installation suivant l'une des revendications précédentes, **caractérisée en ce que** la distance, considérée dans un plan vertical, entre l'unité (73, 75) d'actionnement respective et la réglette (77, 81) d'appui pouvant être associée, est telle qu'un produit de type de récipient encore chaud, provenant de l'installation (13) de moulage, est, avant la prise en charge par les autres parties (79, 83) de guidage et de maintien des unités (73, 75) d'actionnement, pris avec formation d'une sorte de section de refroidissement.

10. Installation suivant l'une des revendications précédentes, **caractérisée en ce que** les réglettes (77, 81) d'appui ont, pour l'application au tube (15) souple de moulage, des bords (97) se rapprochant coniquement l'un de l'autre.

11. Installation suivant l'une des revendications précédentes, **caractérisée en ce que** l'unité (23) de fermeture de l'unité (13) de moulage a un support (43) principal sur lequel des mâchoires (47, 49) principales et des mâchoires (51, 53) de tête sont guidées, de manière mobile, en direction horizontale, indépendamment les unes des autres et qui, au moyen de la première unité (39) de déplacement, est montée déplaçable sur un guidage (31) vertical du bâti (1) de l'installation.

12. Installation suivant l'une des revendications précédentes, **caractérisée en ce que** les mâchoires (47, 49) principales et les mâchoires (51, 53) de tête sont, pour des déplacements de fermeture et d'ouverture, reliées à un dispositif d'entraînement propre associé, qui, chacun, a une transmission (57) à levier pouvant être actionnée au moyen d'un actionneur (62, 63).

13. Installation suivant l'une des revendications précédentes, **caractérisée en ce qu'**également les unités (73, 75) d'actionnement sont guidées, avec possibilité de se déplacer verticalement, sur le guidage (31) vertical du bâti (1) de l'installation, au moyen d'une deuxième unité (41) de déplacement.

14. Installation suivant l'une des revendications précédentes, **caractérisée en ce que** les deux unités de déplacement ont chacune, pour la production des déplacements verticaux, une broche (39, 41) à recirculation de billes, pouvant être entraînées séparément par moteur.

15. Installation suivant l'une des revendications précédentes, **caractérisée en ce que** l'unité (41) de déplacement des unités (73, 75) d'actionnement a un guidage (71) transversal s'étendant verticalement entre les guidages (31) verticaux associés de la partie de l'installation, guidage transversal le long duquel les unités (73, 75) d'actionnement sont guidées avec les autres parties (79, 83) de guidage et de maintien pour leurs déplacements horizontaux et peuvent être déplacées au moyen d'au moins un actionneur (91) et **en ce qu'**il y a, entre les unités (73, 75) d'actionnement, un dispositif (93) d'accouplement synchronisant leur déplacement horizontal.
